# EUROPEAN PATENT APPLICATION

(11) **EP 4 215 370 A1**
(43) Date of publication of application: **26.07.2023**
(21) Application number: 21888916.0
(22) Date of filing: 09.09.2021
(51) Int. Cl.: B41J 2/01, B41J 2/475, B41J 2/485, B41J 3/407, B41J 3/54, A61J 3/06

(54) **PRODUCTION METHOD FOR PRINTED EDIBLE OBJECT AND PRODUCTION DEVICE**

(30) Priority: 09.11.2020 JP 2020186539
(71) Applicant: Qualicaps Co., Ltd., Nara 639-1032 (JP)
(72) Inventor: MORIKAWA Megumu, Yamatokoriyama-shi, Nara 639-1032 (JP); MATSUYAMA Tomokazu, Yamatokoriyama-shi, Nara 639-1032 (JP); TAKAYANAGI Shingo, Yamatokoriyama-shi, Nara 639-1032 (JP); OKAMOTO Hideo, Yamatokoriyama-shi, Nara 639-1032 (JP)
(74) Representative: Isarpatent
(86) International application number: PCT/JP2021/033094
(87) International publication number: WO 2022/097363

(57) **Abstract**

There is provided a method for manufacturing a printing-applied edible object by performing printing on an edible object. The method includes a conveying step of conveying an edible object, and a marking step of forming a marking pattern on the edible object that is conveyed. The marking step includes a laser printing step of performing laser printing on an edible object E to form a first print pattern P1, and an inkjet printing step of performing inkjet printing on the edible object E after the laser printing step to form a second print pattern P2, and the first print pattern P1 and the second print pattern P2 form a marking pattern P. The second print pattern P2 is formed of a material whose visually recognizable state is changed due to a change in an external environment, and information represented by the marking pattern P is changed due to a change in the visually recognizable state of the second print pattern P2.

## Description

### Technical Field

The present invention relates to a method and an apparatus for manufacturing a printing-applied edible object.

### Background Art

In recent years, proliferation of counterfeit medicines has become a problem especially in developing countries, and countermeasures against this problem have been conventionally studied. For example, Patent Literature 1 discloses a method for printing on a tablet. The method enables formation, on a tablet, of a first display layer printed using a visible ink and a second display layer printed using an invisible ink. In the method for printing on a tablet, the invisible content of the second display layer can be confirmed by irradiating a tablet with identifying light such as black light, even when a medicine is one that exactly looks like a genuine medicine. The method is thus considered to be effectively used for determining whether a medicine is one that looks like a genuine medicine.

### Citation List

### Patent Literature

Patent Literature 1: JP 2017-158632 A

### Summary of Invention

### Technical Problem

However, the conventional method for printing on a tablet requires an inspection device irradiating a tablet with identifying light in order to determine whether a medicine is one that looks like a genuine medicine. This requirement makes it difficult for a consumer or the like who does not have such an inspection device to determine whether a medicine is one that looks like a genuine medicine as well as the requirement makes the determination complicated.

It is therefore an object of the present invention to provide a method and an apparatus for manufacturing a printing-applied edible object that enables the authenticity of an edible object to be easily and accurately determined.

### Solution to Problem

The object of the present invention is achieved by a method for manufacturing a printing-applied edible object by performing printing on an edible object, the method including a conveying step of conveying the edible object, and a marking step of forming a marking pattern on the edible object that is conveyed. The marking step includes a laser printing step of performing laser printing on the edible object to form a first print pattern, and an inkjet printing step of performing inkjet printing on the edible object after the laser printing step to form a second print pattern, and the first print pattern and the second print pattern form the marking pattern. The second print pattern is formed of a material whose visually recognizable state is changed due to a change in an external environment, and information represented by the marking pattern is changed due to a change in the visually recognizable state of the second print pattern.

In the method for manufacturing a printing-applied edible object, a visually recognizable state of the second print pattern is preferably caused to be changed by any of disappearance, transparentizing, color development, and color change.

The second print pattern can be formed of a water-soluble ink or a temperature-sensitive ink.

The object of the present invention is achieved by an apparatus for manufacturing a printing-applied edible object by performing printing on an edible object, the apparatus including a conveyance device configured to convey the edible object, and a marking device configured to form a marking pattern on the edible object that is conveyed. The marking device includes a laser printing device configured to perform laser printing on the edible object to form a first print pattern, and an inkjet printing device configured to perform inkjet printing on the edible object on which the first print pattern is formed to form a second print pattern, and the first print pattern and the second print pattern form the marking pattern. The second print pattern is formed of a material whose visually recognizable state is changed due to a change in an external environment, and information represented by the marking pattern is changed due to a change in the visually recognizable state of the second print pattern. Advantageous Effects of Invention

According to the present invention, it is possible to provide a method and an apparatus for manufacturing a printing-applied edible object that enables the authenticity of an edible object to be easily and accurately determined.

### Brief Description of Drawings

FIG. 1 is a schematic configuration diagram illustrating an apparatus for manufacturing a printing-applied edible object according to an embodiment of the present invention.
FIG. 2 is a cross-sectional view illustrating main parts of the apparatus for manufacturing a printing-applied edible object illustrated in FIG. 1.
FIG. 3 is a diagram schematically illustrating an example of a marking pattern.
FIG. 4 is a diagram schematically illustrating another example of the marking pattern.
FIG. 5 is a diagram schematically illustrating still another example of the marking pattern.

### Description of Embodiment

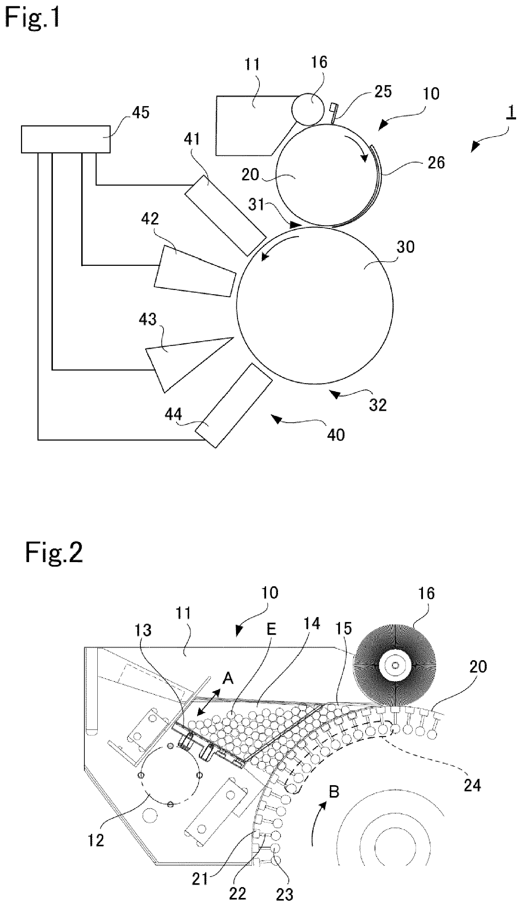

Hereinafter, an embodiment of the present invention will be described with reference to the accompanying drawings. FIG. 1 is a schematic configuration diagram illustrating an apparatus for manufacturing a printing-applied edible object according to an embodiment of the present invention. As illustrated in FIG. 1, an apparatus for manufacturing a printing-applied edible object 1 includes a feeding device 10 that feeds edible objects, a conveyance device 30 that conveys the edible objects fed from the feeding device 10, and a marking device 40 that forms a marking pattern on each edible object conveyed by the conveyance device 30, and can manufacture a printing-applied edible object by performing printing on an edible object. Preferable examples of the edible object include those having respective fixed shapes including a tablet, a capsule, an empty capsule, and a tablet food. In the present embodiment, a flat tablet is used as an edible object on which printing is performed.

As illustrated in FIG. 2, the feeding device 10 includes a hopper 11, a vibration plate 13, a plurality of vibratory guide members 14, a feeding roll 20, and a plurality of guide plates 15. The hopper 11 stores edible objects E. The vibration plate 13 vibrates by being driven by a drive source 12 such as a drive motor or a vibrator. The plurality of vibratory guide members 14 is fixed to the vibration plate 13 to vibrate integrally with the vibration plate 13. The feeding roll 20 feeds the edible objects E. The plurality of guide plates 15 guides the edible objects E toward the feeding roll 20.

The plurality of vibratory guide members 14 is arranged to be spaced from each other along the axial direction of the feeding roll 20. The plurality of vibratory guide members 14 conveys the edible objects E fed therebetween toward the plurality of guide plates 15 by vibration generated in the directions of arrow A. Each of the plurality of guide plates 15 is interposed between the vibratory guide member 14 and the feeding roll 20 with slight gaps. The respective guide plates 15 are fixed inside the hopper 11 while being spaced from each other in the axial direction of the feeding roll 20.

The feeding roll 20 includes a plurality of pockets 21 formed both in the axial direction and in the circumferential direction. The pockets 21 receive the edible objects E that have been conveyed from the vibratory guide members 14 and that have passed between the guide plates 15. Each pocket 21 of the feeding roll 20 has a bottom that communicates with a corresponding one of suction paths 23 extending in the axial direction via a corresponding one of communication paths 22 extending inward in the radial direction of the feeding roll 20. While each pocket 21 passes by the guide plate 15 along with the rotation of the feeding roll 20 in the direction of arrow B, the position of the suction path 23 matches the position of a suction shoe 24, and the edible object E received in the pocket 21 is sucked and held.

When the edible object E received in the pocket 21 has passed by the guide plate 15 along with the rotation of the feeding roll 20, both the suction and holding of the edible object E and the holding of the edge thereof with the guide plates 15 are released, and the edible object E is simultaneously restricted from jumping out of the pocket 21 by a brush roll 16. The edible object E having passed by the brush roll 16 is forcibly toppled down by a restriction guide 26 (see FIG. 1), which has an arc shape in side view and is arranged to partially cover the outer circumferential surface of the feeding roll 20. The edible object E may also be toppled down within the pocket 21 by the brush roll 16, on the upstream side in the conveying direction of the restriction guide 26. The edible object E having been toppled down is conveyed by the feeding roll 20 with one of the front and back sides of the edible object E exposed.

As illustrated in FIG. 1, the conveyance device 30 includes a roll that is rotationally driven in the direction of the arrow, and also includes a plurality of pockets (not illustrated), which is formed along the outer circumferential direction and the axial direction of this roll similarly to the feeding roll 20. Each pocket is connected to a corresponding one of suction paths (not illustrated). Suction is caused in the suction path by a suction shoe (not illustrated) set from the vicinity of a receiving position 31 to the vicinity of a transfer position 32 for the edible object. The suction path thus sucks the edible object received in the pocket in the state of being toppled down by applying a negative pressure. The conveyance device 30 conveys the edible object while the surface of the edible object is exposed. The conveyance device 30 according to the present embodiment is configured to hold the edible objects in a plurality of lines in the axial direction to allow the marking device 40 to perform printing on the edible objects arranged in respective lines. The conveyance device 30 may, however, be configured to hold the edible objects in a single line in the axial direction.

The marking device 40 includes an edible object detection device 41, a laser printing device 42, an inkjet printing device 43, and a printing inspection device 44, which are sequentially provided along the conveying direction in the vicinity of the conveyance device 30. The operations of these devices are controlled by a control device 45.

The edible object detection device 41 includes, for example, a charge-coupled device (CCD) camera, and captures an image of the exposed side of the edible object conveyed by the conveyance device 30 to obtain imaging data. The control device 45 obtains positional information of the edible object from the outline or the like of the edible object based on the obtained imaging data. The control device 45 then calculates respective timings at which the edible object passes by the laser printing device 42, the inkjet printing device 43, and the printing inspection device 44, based on the positional information and the conveyance speed of the edible object, to control the respective operations of the devices. In a case where the edible object has a feature such as a dividing line, the edible object detection device 41 may obtain orientation information of the feature in addition to the positional information of the edible object.

The laser printing device 42 is a device that performs scanning operation with a laser beam emitted from a light source to form a first print pattern on the surface of the edible object. In the present embodiment, the laser printing device 42 irradiates the surface of the edible object with a UV laser beam to cause a color-change inducing substance such as titanium oxide dispersed on the surface of the edible object to be subjected to color change, thereby forming the first print pattern. In a case where the edible object detection device 41 obtains the orientation information of the feature in addition to the positional information, the first print pattern can be formed along the feature. The type of the laser printing device 42 is not particularly limited as long as the laser printing device 42 uses a laser printing method in which marking can be performed by irradiating the surface of the edible object with a laser beam. The laser printing device 42 may be configured to irradiate the surface of the edible object with, for example, a CO₂ laser beam to modify or strip (etch) the surface of the edible object using thermal energy, thereby forming the first print pattern.

The inkjet printing device 43 has a known configuration including a printhead having a plurality of nozzles. The inkjet printing device 43 performs inkjet printing on the exposed side of the edible object conveyed to a predetermined position after the first print pattern is formed to form a second print pattern.

The printing through the laser printing device 42 and the printing through the inkjet printing device 43 are respectively performed based on the first print pattern and the second print pattern stored in advance in a storage unit of the control device 45. By applying the first print pattern and the second print pattern, a marking pattern including a character, a figure, and/or a symbol is formed.

The second print pattern is formed of a material whose visually recognizable state is changed due to a change in an external environment such as humidity or temperature. The change in the visually recognizable state is a change that can be visually recognized by a consumer or the like. For example, the change in the visually recognizable state can be caused by any of disappearance, transparentizing, color development, and color change of the second print pattern. Specifically, when the second print pattern is formed of a water-soluble ink, the second print pattern can be dissolved to disappear by wet or moisture, and thus the second print pattern can be visually removed. Alternatively, when the second print pattern is formed of a temperature-sensitive ink, the second print pattern can be transparentized and thus visually removed, or the color of the second print pattern can be changed to allow the second print pattern to be visually distinguishable from the first print pattern, by body heat, friction heat, or the like. The second print pattern formed of the temperature-sensitive ink can be subjected to color development from a transparent state, or can be subjected to color change from a colored state, by being cooled in a refrigerator or the like. The second print pattern may be formed of a material other than a water-soluble ink and a temperature-sensitive ink, as long as the material has edibility. For example, the second print pattern may be formed of a material whose color can be changed by sunlight or the like.

The printing inspection device 44 includes, for example, a CCD camera, and captures an image of the exposed side of the edible object to obtain imaging data. The control device 45 performs quality determination of the marking by comparing the marking pattern formed on the edible object with a preset marking pattern, based on the obtained imaging data. Based on the quality determination, only non-defective objects are extracted in a subsequent step. The edible object having passed by the printing inspection device 44 is free from the suction of the conveyance device 30 at the transfer position 32, and is transferred to a subsequent step by a suction roller, a chute, or the like (not illustrated).

The apparatus for manufacturing a printing-applied edible object 1 with the configuration described above can manufacture a printing-applied edible object by performing a conveying step of conveying the edible object by using the conveyance device 30 and a marking step of forming a marking pattern on the conveyed edible object by using the marking device 40. The marking step includes a laser printing step of using the laser printing device 42 to form a first print pattern on the edible object, and an inkjet printing step of using the inkjet printing device 43 to form a second print pattern on the edible object, after the laser printing step. The first print pattern and the second print pattern form the marking pattern.

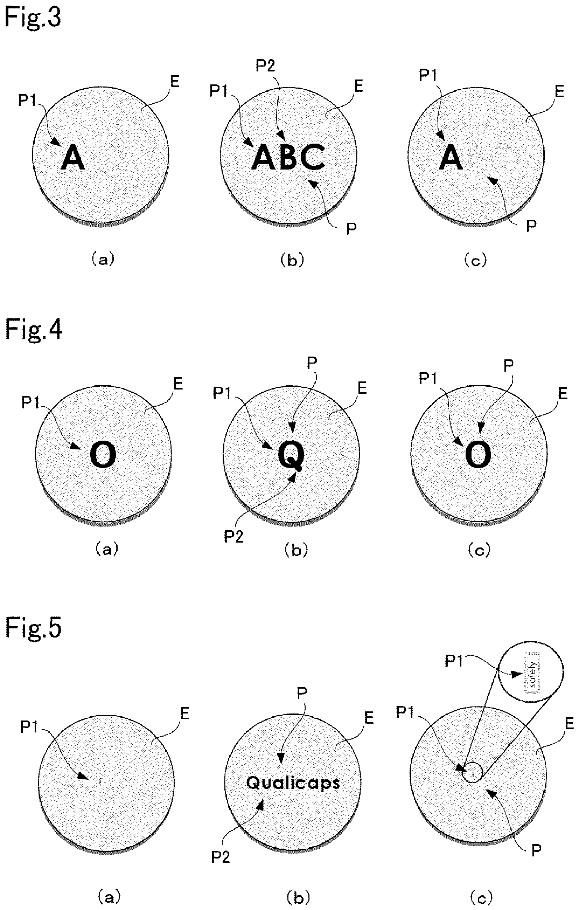

FIG. 3 is a diagram schematically illustrating an example of a marking pattern formed on an edible object. In the laser printing step, a first print pattern P1 including the character "A" is formed on the edible object E as illustrated in FIG. 3(a). Then, in the inkjet printing step, a second print pattern P2 including the characters "BC" is formed on the edible object E to be adjacent to the first print pattern P1, as illustrated in FIG. 3(b). In this manner, a marking pattern P including the characters "ABC" is formed. The second print pattern P2 is formed of a temperature-sensitive ink, and is transparentized from a colored state by body heat.

A consumer or the like who observes the edible object E illustrated in FIG. 3(b) recognizes the characters "ABC" in a normal state. In contrast, when the consumer or the like pinches the edible object E with the fingers or the like to warm the edible object E, the characters "BC" are transparentized as illustrated in FIG. 3(c), and thus the consumer or the like recognizes only the character "A". In this manner, the information represented by the marking pattern P is changed by a specific action of the consumer or the like. The authenticity of the edible object can be thus easily and accurately determined based on the presence or absence of the information change.

FIG. 4 is a diagram schematically illustrating another example of the marking pattern formed on the edible object. In the laser printing step, a first print pattern P1 including the character "O" is formed on the edible object E as illustrated in FIG. 4(a). Then, in the inkjet printing step, a second print pattern P2 including the character "," (the tail of the character "Q") is formed on the edible object E to partially overlap with the first print pattern P1, as illustrated in FIG. 4(b). The first print pattern P1 and the second print pattern P2 applied in this manner form the marking pattern P including the character "Q". The second print pattern P2 is formed of a water-soluble ink, and is dissolved by moisture.

A consumer or the like who observes the edible object E illustrated in FIG. 4(b) recognizes the character "Q" in a normal state. In contrast, when moisture is applied from a humidifier or the like, the character "," is removed as illustrated in FIG. 4(c), and thus the consumer or the like recognizes the character as "O". Also in this case, the information represented by the marking pattern P is changed by a specific action. The authenticity of the edible object can be thus easily and accurately determined.

FIG. 5 is a diagram schematically illustrating still another example of the marking pattern formed on the edible object. In the laser printing step, a first print pattern P1 including the fine characters "safety" is formed on the edible object E as illustrated in FIG. 5(a). Then, in the inkjet printing step, a second print pattern P2 including the characters "Qualicaps" is formed on the edible object E to cover the entire first print pattern P1 as illustrated in FIG. 5(b). The marking pattern P including the first print pattern P1 and the second print pattern P2 is recognized as the characters "Qualicaps" because the first print pattern P1 is covered with the second print pattern P2, and is not visually recognizable. The second print pattern P2 is formed of a temperature-sensitive ink, and is transparentized from a colored state by body heat.

A consumer or the like who observes the edible object E illustrated in FIG. 5(b) recognizes the characters "Qualicaps" in a normal state. In contrast, when the consumer or the like pinches the edible object E with the fingers or the like to warm the edible object E, the consumer or the like recognizes the characters "safety" exposed by transparentizing the characters "Qualicaps" as illustrated in FIG. 5(c). The authenticity of the edible object can be thus easily and accurately determined based on the presence or absence of the information change.

Although an embodiment of the present invention has been described in detail, specific aspects of the present invention are not limited to the above embodiment. For example, the change in the visually recognizable state of the second print pattern P2 may be caused by changing the color to a color different from the color of the first print pattern P1 in addition to being caused by disappearance or transparentizing as described above. That is, the information represented by the marking pattern P may be changed by visually distinguishing the second print pattern P2 from the first print pattern P1. Alternatively, the information represented by the marking pattern P can be changed by causing the second print pattern P2 to be subjected to color development from a transparent state and thus by adding display content. Also in a case where the marking pattern P includes a figure, the information represented by the marking pattern P can be changed by performing deletion, addition, color change, or the like on a part of the component, similarly to the case of including a character.

The apparatus for manufacturing a printing-applied edible object 1 according to the present embodiment is configured to perform printing on one side of an edible object by using the conveyance device 30 and the marking device 40. Printing on both sides of the edible object can, however, be performed by providing another conveyance device and another marking device having respective configurations similar to the conveyance device 30 and the marking device 40 to receive the edible object at the transfer position 32 of the conveyance device 30 and continuously form another marking pattern by using the other conveyance device and the other marking device.

The configuration of the conveyance device 30 is not particularly limited, as long as the conveyance device 30 can hold and convey an edible object while a side of the edible object on which printing is performed is exposed. However, the conveyance device 30 is preferably configured to allow the edible object to pass by the laser printing device 42 and the inkjet printing device 43 while the posture of the edible object is maintained. This configuration enables accurate alignment of the first print pattern P1 and the second print pattern P2. Besides a configuration provided with a suction roll as in the present embodiment, an example of such a configuration of the conveyance device 30 may be a configuration in which the edible object is conveyed by being held between a pair of holding belts.

### Reference Signs List

- 1: apparatus for manufacturing printing-applied edible object
- 10: feeding device
- 30: conveyance device
- 40: marking device
- 41: edible object detection device
- 42: laser printing device
- 43: inkjet printing device
- 44: printing inspection device
- E: edible object
- P: marking pattern
- P1: first print pattern
- P2: second print pattern

## Claims

1. A method for manufacturing a printing-applied edible object by performing printing on an edible object, the method comprising:
a conveying step of conveying the edible object; and
a marking step of forming a marking pattern on the edible object that is conveyed,
wherein
the marking step includes a laser printing step of performing laser printing on the edible object to form a first print pattern, and an inkjet printing step of performing inkjet printing on the edible object after the laser printing step to form a second print pattern, and the first print pattern and the second print pattern form the marking pattern, and
the second print pattern is formed of a material whose visually recognizable state is changed due to a change in an external environment, and information represented by the marking pattern is changed due to a change in the visually recognizable state of the second print pattern.

2. The method for manufacturing a printing-applied edible object according to claim 1, wherein the visually recognizable state of the second print pattern is changed by any of disappearance, transparentizing, color development, and color change.

3. The method for manufacturing a printing-applied edible object according to claim 1 or 2, wherein the second print pattern is formed of a water-soluble ink or a temperature-sensitive ink.

4. An apparatus for manufacturing a printing-applied edible object by performing printing on an edible object, the apparatus comprising:
a conveyance device configured to convey the edible object; and
a marking device configured to form a marking pattern on the edible object that is conveyed,
wherein
the marking device includes a laser printing device configured to perform laser printing on the edible object to form a first print pattern, and an inkjet printing device configured to perform inkjet printing on the edible object on which the first print pattern is formed to form a second print pattern, and the first print pattern and the second print pattern form the marking pattern, and
the second print pattern is formed of a material whose visually recognizable state is changed due to a change in an external environment, and information represented by the marking pattern is changed due to a change in the visually recognizable state of the second print pattern.
